# EUROPEAN PATENT APPLICATION

(11) **EP 1 142 845 A1**
(43) Date of publication of application: **10.10.2001**
(21) Application number: 01303027.5
(22) Date of filing: 30.03.2001
(51) Int. Cl.: C03C 17/42, C03C 17/34, B60J 1/00

(54) **Anti-contaminant coating film, producing method thereof, anti-contaminant glass for automobile, producing method thereof, and automobile employing the glass**

(30) Priority: 31.03.2000 JP 2000099822
(71) Applicant: MATSUSHITA ELECTRIC INDUSTRIAL CO., LTD., Kadoma-shi, Osaka 571-8501 (JP)
(72) Inventor: Ogawa, Kazufumi, Nara-shi, Nara 630-8101 (JP); Nomura, Takaiki, Katano-shi, Osaka 576-0021 (JP)
(74) Representative: Dempster, Benjamin John Naftel

(57) **Abstract**

A method of producing an anti-contaminant coating film includes: contacting a surface of a substrate material with a solution for forming a silica-based coating film in a dry atmosphere, the solution comprising a first organic solvent and a silane-based chemically adsorbing substance, and thereafter evaporating the first organic solvent; forming, on the substrate material, a silica-based coating film having hydroxyl groups by contacting the silane-based chemically adsorbing substance on the substrate material with water; forming a fluorine-containing coating film on the silica-based coating film by, without baking the silica-based coating film, contacting the substrate material with a solution for forming a fluorine-containing coating film, the solution comprising a fluorine-containing silane-based chemically adsorbing substance and a second organic solvent; and baking the substrate material in an inert gas atmosphere, the substrate material having the silica-based coating film and the fluorine-containing coating film formed thereon. Thereby, an anti-contaminant coating film strongly bonded with a substrate material and having excellent characteristics such as good durability, abrasion resistance, and transparency can be produced.

## Description

The present invention relates to an anti-contaminant coating film and a method of producing the film. The invention also relates to an anti-contaminant glass for use in automobiles and a method of producing the glass. The invention further relates to an automobile employing the glass.

Conventionally, highly durable anti-contaminant coating films have been produced by the following method: a hard coat film is formed in advance on a substrate made of glass or the like by such a method as a sol-gel method, and on the hard coat film, a fluorocarbon-based coating film is formed.

The details of the conventional method are as follows. First, an acid catalyst is added to an alcohol solution in which an alkoxysilane compound, such as tetraethoxysilane, is dissolved, and the alkoxysilane compound is dealcoholized in the presence of the acid catalyst. A solution for forming a silica coating film is thus prepared. Second, the silica coating film is applied to a substrate, is pyrolyzed, and thereafter baked sufficiently at high temperature (about 250 to 500°C) to form a silica coating film, which serves as an undercoat layer (a primer layer). Third, a fluorocarbon-based anti-contaminant coating film is formed by a known technique. In the case where the substrate is made of glass, the silica coating film, serving as an undercoat layer, blocks the leaching of alkaline components from the glass. Since the fluorocarbon-based anti-contaminant coating film is formed over the silica-based coating film, the density of the film can be made large, which improves the contamination resistance of the film.

However, the above-described conventional method of producing an anti-contaminant coating film has at least the following drawback. In the conventional method, the silica-based coating film, serving as an undercoat layer, is solidly formed by previously baking the silica-based coating film at high temperature, and on the surface thereof, the fluorocarbon-based anti-contaminant coating film is formed. Accordingly, although the resulting silica-based coating film is strong in its film quality, the bonding strength of the fluorocarbon-based coating film with the surface of the silica-based coating film tends to be weak. For this reason, an anti-contaminant coating film having satisfactory abrasion resistance has not been obtained.

In view of the foregoing and other problems in the prior art, it is an object of the present invention to provide an anti-contaminant coating film having excellent durability, abrasion resistance, transparency and remarkably high bonding strength to a substrate, and to provide a method of producing the film as well as applications of the film.

### Producing method of anti-contaminant coating film

This and other objects are accomplished in accordance with the present invention by providing a method of producing an anti-contaminant coating film, comprising:
contacting a surface of a substrate with a solution for forming a silica-based coating film in a dry atmosphere, the solution comprising a first organic solvent and a silane-based chemically adsorbing substance, and thereafter evaporating the first organic solvent;
forming, on the substrate, a silica-based coating film having hydroxyl groups by contacting the silane-based chemically adsorbing substance on the substrate with water;
forming a fluorine-containing coating film on the silica-based coating film by, without baking the silica-based coating film, contacting the substrate with a solution for forming a fluorine-containing coating film, the solution comprising a fluorine-containing silane-based chemically adsorbing substance and a second organic solvent; and
baking the substrate in an inert gas atmosphere, the substrate having the silica-based coating film and the fluorine-containing coating film formed thereon.

The silane-based chemically adsorbing substance used in the above-described method is a chemically adsorbing substance capable of reacting with a substance having functional groups with active hydrogen, specifically, a chemically adsorbing substance including a silane-based compound or a siloxane compound. For example, when the silane-based chemically adsorbing substance reacts with water, the substance becomes a substance in which hydroxyl groups are introduced.

Accordingly, as in the method above, when the surface of the substrate on which the solution for forming a silica-based coating film is applied thereon is contacted with water, a silica-based coating film having many hydroxyl groups in the film and on the surface of the film can be formed. In the step of forming the silica-based coating film, baking is not performed and only the evaporating of the first organic solvent is performed, and therefore it is possible to prevent the disappearance of or decrease in the OH groups existing on the surface of the film.

Thus, while the distribution density of the adsorption sites (OH groups) is maintained at a very high level, the producing process can proceed to the step of forming a fluorine-containing coating film. In the step of forming a fluorine-containing coating film, such a silica-based coating film is used when a solution for forming a fluorine-containing coating film is applied on the surface thereof, achieving the formation of a fluorine-containing coating film in which a fluorine-containing silane-based chemically adsorbing substance is chemically adsorbed at high density.

Then, in the method described above, the substrate is baked at the final stage of the producing process so as to cure the silica-based coating film and the fluorine-containing coating film. This baking step is performed in an inert gas atmosphere in order to prevent the fluorine-containing coating film from being oxidized and destroyed by high temperature baking.

Thus, according to the above-described method, a fluorine-containing coating film having very high film density can be formed utilizing a silica-based coating film strongly bonded to a substrate, and as a consequence, it is made possible to produce an anti-contaminant coating film having excellent characteristics such as good durability and good contamination resistance.

The method of producing an anti-contaminant coating film according to the present invention comprises: contacting a surface of a substrate with a solution for forming a silica-based coating film in a dry atmosphere, the solution comprising a first organic solvent and a silane-based chemically adsorbing substance, and thereafter evaporating the first organic solvent; forming, on the substrate, a silica-based coating film having hydroxyl groups by contacting the silane-based chemically adsorbing substance on the substrate with water; forming a fluorine-containing coating film on the silica-based coating film by, without baking the silica-based coating film, contacting the substrate with a solution for forming a fluorine-containing coating film, the solution comprising a fluorine-containing silane-based chemically adsorbing substance and a second organic solvent; and baking the substrate in an inert gas atmosphere, the substrate having the silica-based coating film and the fluorine-containing coating film formed thereon. By employing such a method, it is made possible to produce an anti-contaminant coating film having excellent characteristics such as high bonding strength, good durability, good abrasion resistance, and good transparency.

In addition, the baking time may be in the range of 10 to 100 minutes.

In the case where the baking temperature is in the range of 300°C to 450°C, when the step of baking is carried out within the above time range, the hardness of the silica-based coating film can be increased and the deterioration of the anti-contaminant coating film can be suppressed, achieving the formation of an anti-contaminant coating film having excellent characteristics such as good durability.

In addition, the above-described method may further comprise, immediately following the step of forming a silica-based coating film, heat-treating the film at a temperature lower than a temperature at which the silica-based coating film cures.

By employing this method, since the step of heat-treating the film is carried out at such a temperature that the silica-based coating film does not cure, it is possible to prevent the elimination of the OH groups existing on the film surface, which OH groups serve as adsorption sites, and to form a silica-based coating film such that the film is hardened to a certain degree. When the silica-based coating film is hard to a certain degree, the fluorine-containing coating film can be more easily formed, and thereby a high-quality fluorine-containing coating film can be produced. It is to be noted here that "the temperature at which the silica-based coating film cures" means a temperature at which the OH groups contained in the silica-based coating film undergo condensation polymerization by dehydration, and thereby cure, forming a crosslinked structure.

In addition, the heat-treating may be performed at a temperature of 200°C or lower.

When the temperature is in the above range, the elimination of the OH groups on the surface of the silica-based coating film can be prevented, and in addition, the fluorine-containing silane-based chemically adsorbing substance can be chemically adsorbed to such a degree that the detachment resistance is not degraded.

In addition, the solution for forming a silica-based coating film may be such that the first organic solvent is a non-aqueous organic solvent, and the silane-based chemically adsorbing substance is a chlorosilane compound or a chlorosiloxane compound.

The non-aqueous organic solvent, serving as the first organic solvent, does not contain substances having impurities such as water and active hydrogen, and does not react with silane compounds having activating groups such as chlorosilyl groups. For this reason, when a chlorosilane compound or a chlorosiloxane compound is dissolved in such a non-aqueous solvent, the resulting solution for forming a silica-based coating film does not undergo deactivation.

In addition, the solution for forming a silica-based coating film may be such that the first organic solvent is an organic solvent other than a non-aqueous organic solvent and the silane-based chemically adsorbing substance is an alkoxysilane compound.

When the reaction with water or polymerization is performed, the use of an alkoxysilane compound makes it easy to control the temperature of the reaction. Moreover, when reacting with water, alkoxysilane compounds do not produce harmful products such as hydrochloric acid to the like, and therefore they are easy to handle. Hence, according to the above-described method, a good silica-based coating film having many adsorption sites can be produced with high production efficiency. Furthermore, by the step of baking, which is to be performed at the last stage of the production, it is possible to strongly bond the silica-based coating film with the substrate, and as a result, a highly durable anti-contaminant coating film can be achieved.

In addition, the solution for forming a fluorine-containing coating film may be such that the second organic solvent is a non-aqueous organic solvent and the fluorine-containing silane-based chemically adsorbing substance is a fluoroalkylchlorosilane compound.

By employing a non-aqueous organic solvent, the deactivation of the fluoroalkylchlorosilane compound can be prevented when the fluoroalkylchlorosilane compound is dissolved in the non-aqueous organic solvent. Thereby, it is made possible to prepare a solution for forming a fluorine-containing coating film which is excellent in terms of the reactivity with the substrate. Moreover, since a film made from a compound having fluoroalkyl groups is excellent in terms of water repellency and contamination resistance, the film containing the fluoroalkylchlorosilane compound can prevent water infiltration between the film and the substrate, which further improves the durability of the anti-contaminant coating film.

In addition, the above-described solution for forming a fluorine-containing coating film may be such that the second organic solvent is a non-aqueous organic solvent and the fluorine-containing silane-based chemically adsorbing substance is a fluoroalkylalkoxysilane compound.

An alkoxysilane compound has such advantages that the reaction with water and the polymerization reaction are easily controlled by temperature, and that the compound is easy to handle because, when the compound reacts with water, harmful products are not produced. Therefore, the fluorine-containing coating film can be produced with high production efficiency. Moreover, since the compound has fluoroalkyl groups, it is possible to produce a fluorine-containing coating film having excellent water repellency and contamination resistance, and furthermore, it is possible to prevent water infiltration between the silica-based coating film and the substrate, leading to further improvement in the durability.

Further, in the above-described method of the invention, the second organic solvent may be a hydrocarbon-based solvent, a fluorine-based solvent, or a chlorine-based solvent.

These non-aqueous organic solvents absorb little water and therefore prevent the deactivation of the solution for forming a silica-based coating film or the solution for forming a fluorine-containing coating film when the silica-based coating film or the fluorine-containing coating film is formed.

Further, in the above-described method of the invention, the organic solvent other than a non-aqueous organic solvent may be an alcohol-based solvent, an ether-based solvent, or an ester-based solvent.

### Producing method of anti-contaminant glass for automobiles

In order to solve the foregoing and other problems in the prior art, the present invention provides a method of producing an anti-contaminant glass for automobiles, comprising:
contacting a surface of a first substrate formed in a predetermined shape with a solution for forming a silica-based coating film in a dry atmosphere, the solution comprising a first organic solvent and a silane-based chemically adsorbing substance, and thereafter evaporating the first organic solvent;
forming, on the substrate, a silica-based coating film having hydroxyl groups by contacting the silane-based chemically adsorbing substance on the substrate with water;
forming a fluorine-containing coating film on the silica-based coating film by, without baking the silica-based coating film, contacting the substrate with a solution for forming a fluorine-containing coating film, the solution comprising a fluorine-containing silane-based chemically adsorbing substance and a second organic solvent;
baking the substrate in an inert gas atmosphere, the substrate having the silica-based coating film and the fluorine-containing coating film formed thereon; and
attaching the first glass substrate to a second glass substrate, which forms a pair with the first glass substrate, in such a manner that a reverse surface of the first glass substrate is adhered onto the second glass substrate, the reverse surface being opposite from the surface having the silica-based coating film and the fluorine-containing coating film formed thereon.

According to the above-described method, it is possible to produce an anti-contaminant glass for automobiles, which can be suitably used for, for example, a windshield for an automobile and has excellent characteristics such as good durability and contamination resistance.

Further, in the above-described method, the first glass substrate may be an air-tempered glass with a window defogger.

According to this method, it is possible to produce an anti-contaminant glass for automobiles having excellent characteristics such as good durability and contamination resistance.

### Anti-contaminant coating film

In order to solve the foregoing and other problems in the prior art, the invention also provides an anti-contaminant coating film comprising:
a fluorine-containing coating film formed on a surface of a substrate, and a silica-based coating film interposed between the substrate and the fluorine-containing coating film;
the anti-contaminant coating film produced by the process comprising;
contacting the surface of the substrate with a solution for forming a silica-based coating film in a dry atmosphere, the solution comprising a first organic solvent and a silane-based chemically adsorbing substance, thereafter evaporating the first organic solvent, and thereafter, contacting the silane-based chemically adsorbing substance on the substrate with water, whereby the silica-based coating film having hydroxyl groups is formed;
contacting the substrate with a solution for forming a fluorine-containing coating film, the solution comprising a fluorine-containing silane-based chemically adsorbing substance and a second organic solvent, and thereafter evaporating the second organic solvent, whereby the fluorine-containing coating film is formed; and
baking the substrate in an inert gas atmosphere, the substrate having the silica-based coating film and the fluorine-containing coating film formed thereon.

According to the above-described aspect of the invention, after the substrate is contacted with the solution for forming a silica-based coating film, the evaporating of the first organic solvent is carried out while the baking is not, which makes it possible to form a silica-based coating film having many OH groups on the film surface. When such a surface of the silica-based coating film is contacted with the solution for forming a fluorine-containing coating film, the fluorine-containing silane-based chemically adsorbing substance is chemically adsorbed at high density. Thus, the resulting fluorine-containing coating film having the above-described configuration has a remarkably high film density, and is strongly bonded with the surface of the silica-based coating film, leading to excellent durability and abrasion resistance. In addition, since the fluorine-containing silane-based chemically adsorbing substance is chemically adsorbed at high density, a fluorine-containing coating film containing fluorine atoms at high density is provided, whereby the resulting anti-contaminant coating film also achieves excellent contamination resistance.

### Anti-contaminant glass for automobiles and automobile provided therewith

In order to solve the foregoing and other problems in the prior art, the invention also provides an anti-contaminant glass for automobiles, comprising:
an anti-contaminant coating film provided on a glass substrate formed in a predetermined shape, and a silica-based coating film interposed between the substrate and the fluorine-containing coating film;
the anti-contaminant coating film produced by the process comprising;
contacting the surface of the substrate with a solution for forming a silica-based coating film in a dry atmosphere, the solution comprising a first organic solvent and a silane-based chemically adsorbing substance, thereafter evaporating the first organic solvent, and thereafter, contacting the silane-based chemically adsorbing substance on the substrate with water, whereby the silica-based coating film having hydroxyl groups is formed;
contacting the substrate with a solution for forming a fluorine-containing coating film, the solution comprising a fluorine-containing silane-based chemically adsorbing substance and a second organic solvent, and thereafter evaporating the second organic solvent, whereby the fluorine-containing coating film is formed; and
baking the substrate in an inert gas atmosphere, the substrate having the silica-based coating film and the fluorine-containing coating film formed thereon.

According to the above-described construction of the invention, the fluorine-containing coating film is such that a fluorine-containing silane-based chemically adsorbing substance is chemically adsorbed at high density on a silica-based coating film that has been formed without baking the film, and therefore contains fluorine atoms at high density. Therefore, an anti-contaminant glass for automobiles having such a fluorine-containing film exhibits excellent contamination resistance. Furthermore, the fluorine-containing coating film is a chemically adsorbed film and therefore is strongly bonded with the silica-based coating film. In short, the fluorine-containing coating film has excellent durability and abrasion resistance, and thereby it is possible to provide an anti-contaminant glass for automobiles having a long-lasting contamination resistance.

In the above-described construction of the invention, the glass substrate may be an air-tempered glass with a window defogger.

According to this construction of the invention, such an air-tempered glass with a window defogger can be used as the glass substrate because the baking temperature is such that the anti-contaminant glass for automobiles is not deformed.

In order to solve the foregoing and other problems in the prior art, the invention also provides an automobile comprising:
an anti-contaminant glass having an anti-contaminant coating film provided on a surface of a glass substrate formed in a predetermined shape;
the anti-contaminant coating film produced by the process comprising;
contacting the surface of the substrate with a solution for forming a silica-based coating film in a dry atmosphere, the solution comprising a first organic solvent and a silane-based chemically adsorbing substance, thereafter evaporating the first organic solvent, and thereafter, contacting the silane-based chemically adsorbing substance on the substrate with water, whereby the silica-based coating film having hydroxyl groups is formed;
contacting the substrate with a solution for forming a fluorine-containing coating film, the solution comprising a fluorine-containing silane-based chemically adsorbing substance and a second organic solvent, and thereafter evaporating the second organic solvent, whereby the fluorine-containing coating film is formed; and
baking the substrate in an inert gas atmosphere, the substrate having the silica-based coating film and the fluorine-containing coating film formed thereon.

According to the above-described construction of the invention, by providing the automobile with an anti-contaminant glass having an anti-contaminant coating film, it is possible to provide an automobile equipped with a windshield and/or a rear window having a clean glass surface. Since the anti-contaminant coating film exhibits excellent characteristics such as good abrasion resistance and good detachment resistance, even when, for example, the windshield or the rear window is wiped by hydrophilic wipers provided thereon, the anti-contaminant coating film does not detach from the glass surface. Thus, it is possible to provide an automobile having an anti-contaminant glass for automobiles that can maintain a clean glass surface even with the use of hydrophilic wipers. Furthermore, the anti-contaminant coating film has excellent weather resistance, and therefore it is possible to provide an automobile provided with a windshield and/or a rear window that can exhibit excellent contamination resistance over a long period of time.

For a more complete understanding of the present invention, and the advantages thereof, reference is now made to the following descriptions taken in conjunction with the accompanying drawings, in which;
Figs. 1A and 1B illustrate a method of producing an anti-contaminant coating film of Example 1 according to the present invention, in which Fig. 1A is a schematic cross sectional view showing a chlorosiloxane oligomer coating film and Fig. 1B is a schematic cross-sectional view showing a polysiloxane coating film;
Fig. 2 is a schematic cross-sectional view showing the anti-contaminant coating film of Example 1;
Figs. 3A and 3B schematically illustrate an anti-contaminant glass for automobiles, the glass of Example 3, on which the anti-contaminant coating film is provided thereon, Fig. 3A showing a windshield glass and Fig. 3B a rear window glass;
Figs. 4A and 4B illustrate a method of producing an anti-contaminant coating film of Example 2, in which Fig. 4A is a schematic cross sectional view showing a hexamethoxydisiloxane oligomer coating film of Example 2 and Fig. 4B is a cross-sectional view showing a polysiloxane film; and
Fig. 5 is a schematic cross-sectional view showing the anti-contaminant coating film of Example 2.

Now, preferred embodiments of the present invention are detailed below.

In a method of producing an anti-contaminant coating film according to the present invention, first, a silica-based coating film composed of film-forming molecules with hydroxyl groups is formed in the following manner; a solution for forming a silica-based coating film, which has been prepared in advance, is applied onto a substrate to form a first coating film, and after a first organic solvent contained in the first coating film is evaporated, the first coating film is contacted with water. Second, a fluorine-containing coating film is formed in the following manner: a solution for forming a fluorine-containing coating film, which has been prepared in advance, is applied onto the silica-based coating film to form a second coating film, and thereafter, a second organic solvent contained in the second coating film is evaporated. Third, a baking step is performed, in which the silica-based coating film and the fluorine-containing coating film are heat treated in an inert gas atmosphere to cure the films. Thus, an anti-contaminant coating film comprising a silica-based coating film and a fluorine-containing coating film is produced.

The solution for forming a silica-based coating film is prepared by dissolving a silane-based chemically adsorbing substance in the first organic solvent in a dry atmosphere (a relative humidity of 35% or lower) so that a predetermined concentration can be obtained. When the silane-based chemically adsorbing substance is a chlorosilane compound, or a monomer or an oligomer of a chlorosiloxane compound, it is preferable to employ a non-aqueous organic solvent for the first organic solvent. Non-aqueous organic solvents do not contain water or like impurities, or do not react with silane compounds having activating groups such as chlorosilyl groups, which makes it possible to prevent the deactivation of the compounds in the case where such compounds as chlorosilane compounds or chlorosiloxane compounds are dissolved therein.

Examples of the chlorosilane compounds include SiCl₄, SiHCl₃, and SiH₂Cl₂. Examples of the chlorosiloxane compounds include Cl₃SiO₃SiCl₃, Cl(SiCl₂O)₂SiCl₃, and Cl(SiCl₂O)₃SiCl₃. Examples of the non-aqueous organic solvents include hydrocarbon-based solvents, fluorine-based solvents, and chlorine-based solvents. Specific examples of such solvents include dimethyl silicones and perfluorocarbons. When a compound having a low boiling point is employed for the chlorosilane compound, the compound may be oligomerized in advance. This prevents the compound having a low boiling point from evaporating together with the first organic solvent when the first organic solvent is evaporated (the details are discussed later).

An example of the silane-based chemically adsorbing substance is alkoxysilane compounds. The use of alkoxysilane compounds makes it possible to control the progress of the reaction with water or the progress of the polymerization by temperature. Alkoxysilane compounds do not produce harmful side products such as hydrochloric acid and are therefore easy to handle, leading to increased production efficiency. Examples of the first organic solvent suitably used in the case where alkoxysilane compounds are employed include alcohol-based organic solvents, ether-based organic solvents, and ester-based organic solvents. Examples of the alkoxysilane compounds include H₃COSi(OCH₃)₂OSi(OCH₃)₃, Si(OC₂H₅)₄, SiOH(OC₂H₅)₃, and CH₃O(Si(OCH₃)₂O)₂Si(OCH₃)₅. Examples of the organic solvent include methanol and ethanol.

Next, the solution for forming a silica-based coating film is applied onto a substrate that has been rinsed and degreased in advance, so as to form the first coating film. When the solution for forming a silica-based coating film contains a monomer or oligomer of a chlorosilane compound or a chlorosiloxane compound, the OH groups on the substrate surface and the chlorosilyl groups cause dehydrochlorination, and thereby the monomer or oligomer of the chlorosilane compound or the chlorosiloxane compound is bonded with the substrate surface by siloxane bonds. By contrast, when the solution for forming a silica-based coating film contains an alkoxysilane compound, the OH groups on the substrate surface react with Si-OR, where R represents CH₃, C₂H₅, or the like, causing the desorption of R-OH, and the alkoxysilane compound is bonded with the substrate surface by siloxane bonds.

The substrate material is not particularly limited, insofar as the substrate has, on its surface, a surface functional group having an active hydrogen, such as OH groups and imino groups. Specific examples include substrates made of, such as, glass, metal, ceramic, plastic, wood, stone, fiber, paper, and polymer resin. The method of applying the solution for forming a silica-based coating film to the surface of the substrate is not particularly limited, and various known techniques may be employed. Specific examples thereof include a spinner method, an immersion method, a roll coating method, and a printing method.

Subsequently, the first organic solvent contained in the first coating film is evaporated, and thereafter, the substrate is brought into contact with moisture in the air by, for example, exposing the substrate to the air atmosphere, so as to form a silica-based coating film. When the first coating film is contacted with water, chlorosilyl groups in the film react with H₂O, causing dehydrochlorination, and the Cl groups are substituted by the OH groups. Thus, a silica-based coating film in which a large number of OH groups are contained is formed.

It is to be noted here that the prior art methods of producing a silica-based coating film require a high temperature heat treatment in which the film is baked at high temperature (approximately at 250-300°C) after the film is brought into contact with water. By this treatment, Si-OH groups are dehydrated and thereby bonded with each other by siloxane bonds to form a crosslinked structure, and it is made possible to obtain a silica-based coating film strongly bonded with the substrate. However, the high temperature heat treatment has at least a disadvantage such that OH groups on the surface of the silica-based coating film are also eliminated.

Because of this disadvantage, in the prior art methods, the silica-based coating film does not serve the expected function, that is, in order to form a fluorine-containing coating film having a high film density, more OH groups than those on the substrate surface should be provided on the surface of the silica-based coating film so that a larger amount of fluorine-containing silane-based chemically adsorbing substance is adsorbed thereto. Note that it is necessary that the silica-based coating film serve a function as an undercoat layer (primer layer) such that a fluorine-containing coating film having a high film density can be formed even when the substrate has a small number of OH groups, or such that a fluorine-containing coating film having an even higher film density can be formed when the substrate has many OH groups on its surface.

In contrast, in the method according to the invention, the baking step is not performed immediately after the formation of the silica-based coating film. Therefore, with the maintaining of many OH groups on the surface of the film, or in other words without a decrease in the number of adsorption sites on the surface of the film, the forming of the silica-based coating film can be followed by a step of forming a fluorine-containing coating film, which will be described below. It is noted that, if it is preferable that the first organic solvent be evaporated quickly, heat treatment can be carried out. When the heat treatment is desired, it is preferable that the temperature of the heat treatment be in the range of 80°C-120°C in order to prevent the OH groups existing on the film surface from being eliminated.

In the next step, as mentioned above, a fluorine-containing coating film is formed. A solution for forming a fluorine-containing coating film, which is to be used in the formation of the fluorine-containing coating film, can be prepared by dissolving a fluorine-containing silane compound in a second organic solvent, a non-aqueous organic solvent or a solvent other than a non-aqueous organic solvent, so that a predetermined concentration can be obtained.

Examples of the fluorine-containing silane compound include a fluoroalkyl silane compound represented by the following general formula (1).

F(CF₂)ₘ(CH₂)ₙSiR_{q}X_{3-q} (1)

In the above formula, m is an integer of 1 to 15, n is an integer of 0 to 15, m+n is an integer of 1 to 30 (the optimum value range of m+n was 10 to 30 in view of the molecule alignment in the film formation), q is an integer of 0 to 2, R denotes an alkyl group, and X denotes an alkoxy group or an atom of halogen such as iodine, bromine, chlorine, and fluorine.

Specific examples of the compounds represented by the above formula (1) are as follows:

(a) CF₃(CF₂)₅(CH₂)₂SiCl₃

(b) CF₃(CF₂)₇(CH₂)₂SiCl₃

(c) CF₃(CF₂)₉(CH₂)₂SiCl₃

(d) CF₃(CF₂)₉(CH₂)₂SiBr₃

(e) CF₃(CF₂)₉(CH₂)₂Si(N=C=O)₃

Examples of the fluorocarbon-containing silane compound include a fluoroalkylphenyl chlorosilane compound represented by the following general formula (2).

F(CF₂)ₘC₆H₄SiR_{q}X_{3-q} (2)

In the above formula, m is an integer of 1 to 15 (the optimum value range in view of the molecular alignment in the film formation was 10-30), q is an integer of 0 to 2, R denotes an alkyl group, X denotes an alkoxy group or an atom of halogen such as iodine, bromine, chlorine, and fluorine.

More specific examples of the compounds represented by the above general formula (2) are as follows:

(a) CF₃(CF₂)₅C₆H₄SiCl₃

(b) CF₃(CF₂)₉C₆H₄SiCl₃

(c) CF₃(CF₂)₇C₆H₄SiCl₃

(d) CF₃(CF₂)₇C₆H₄SiCH₃Cl₂

Examples of the fluorocarbon-containing silane compound further include the compounds represented by the following general formula (3), which have activating groups such as fluoroalkyl groups and alkyl groups, and chlorosilane groups.

F(CF₂)ₘ(CH₂)ₙA(CH₂)ₚSi(CH₃)_{g}X_{3-q} (3)

In the above formula, m is an integer of 1 to 8, n is an integer of 0 to 2, m+n is an integer of 1 to 10, p is an integer of 5 to 25, and q is an integer of 0 to 2, and A represents an oxygen atom (-O-), oxycarbonyl groups (-COO-), or dimethylsilyl groups (-Si(CH₃)₂-), and X denotes an alkoxy group or an atom of halogen such as iodine, bromine, chlorine, and fluorine.

More specific examples of the compounds represented by the above general formula (3) include the following compounds:

(a) CF₃CH₂O(CH₂)₁₅SiCl₃

(b) CF₃(CH₂)₂Si(CH₃)₂(CH₂)₁₅SiCl₃

(c) F(CF₂)₄(CH₂)₂Si(CH₃)₂(CH₂)₉SiCl₃

(d) CF₃COO(CH₂)₁₅SiCl₃

The solution for forming a fluorocarbon-containing coating film prepared in the above-described manner is applied onto the silica-based coating film to form a second coating film. Thereby, chlorosilyl groups in the fluorine-containing silane-based chemically adsorbing substance and OH groups on the surface of the silica-based coating film undergo dehydrochlorination, and the fluorine-containing silane-based chemically adsorbing substance is tightly bonded with the surface of the silica-based coating film (over the substrate). As described above, the silica-based coating film is not subjected to the step of baking in the process of the film formation, and therefore has many OH groups which serve as adsorption sites. For this reason, chemically adsorbing substances such as listed above are adsorbed on the surface of the silica-based coating film at high density. This makes it possible to form a fluorine-containing coating film having a high film density, and the film is excellent in terms of detachment resistance and reliability.

Subsequently, the second organic solvent in the second coating film is evaporated to form a fluorine-containing coating film. If it is preferable that the second organic solvent be evaporated quickly, heat treatment can be carried out. When the heat treatment is desired, it is preferable that the temperature of the heat treatment be in the range of 80°C-150°C. If the temperature of the heat treatment is lower than 80°C, the resulting film cannot achieve a sufficient strength necessary in practical use. On the other hand, if the temperature is higher than 150°C, deterioration of the fluorine-containing coating film is caused.

Finally, the step of baking is performed in an inert gas atmosphere, the step in which the silica-based coating film and the fluorine-containing coating film produced in the above-described manner are heat-treated at high temperature to cure the films. By this step, the OH groups existing in the silica-based coating film are dehydrated and undergo condensation polymerization, which cures the film, and consequently a silica-based coating film having a dense film structure can be produced. In addition, the molecules that constitute the thin film are bonded more strongly with the substrate, resulting in a silica-based coating film strongly bonded with the substrate. Thus, it is possible to produce an anti-contaminant coating film having excellent characteristics such as good abrasion resistance and weather resistance.

In the foregoing step of baking, it is preferable that the temperature of baking be in the range of 300°C to 450°C, more preferably in the range of 380°C to 420°C. On one hand, if the baking temperature is lower than 300°C, the silica-based coating film and the fluorine-containing coating film do not sufficiently cure. This is undesirable because the detachment resistance and the abrasion resistance of the films are thereby degraded. On the other hand, if the baking temperature is higher than 450°C, the coating films themselves deteriorate. This is also undesirable because the contamination resistance is thereby degraded. In other words, by performing the step of baking in the specified baking temperature range as above, the formation of an anti-contaminant coating film having remarkable durability and contamination resistance is made possible.

It is preferable that the step of baking be carried out in an inert gas atmosphere. If the high temperature heat treatment is carried out in the air, the fluorine-containing coating film is oxidized and thereby destroyed. It is also preferable that the baking time in the step of baking be in the range of 10 to 120 minutes, more preferably in the range of 30 to 60 minutes. Although the preferable baking time may depend on the baking temperature, if the baking time is shorter than 10 minutes, the curing of the films is insufficient, causing degradation of detachment resistance and abrasion resistance. On the other hand, even if the baking time is longer than 120 minutes, the abrasion resistance is no longer improved, and therefore, such a long baking time is merely wasteful, leading to a decrease in production efficiency.

According to the invention, it is also possible to carry out a low temperature heat treatment immediately after the forming of the silica-based coating film. It is preferable that the heating temperature be 200°C or lower, and more preferably be in the range of 100 to 180°C. If the temperature is higher than 200°C, the number of the hydroxyl groups on the silica-based coating film coating film becomes small and the bonding strength of the film with the fluorine-containing film to be formed subsequently reduces, which causes degradation in the reliability of the film. In particular, under an environment having a temperature of 250°C or higher, the OH groups on the surface of the silica-based coating film greatly decrease, and as a result, the resulting fluorine-containing coating film shows a low film density. This results in a poor anti-contaminant coating film having low abrasion resistance and so forth.

As has been discussed above, the method of producing an anti-contaminant coating film according to the invention employs a technique such that a silica-based coating film having many hydroxyl groups is formed on a substrate, and without baking the silica-based coating film, a fluorine-containing silane-based chemically adsorbing substance is chemically adsorbed on the surface of the film, followed by baking the film in an inert gas atmosphere. According to this producing method, more active hydrogens are present on the surface of the silica-based coating film, and therefore, by contacting a solution for forming a fluorine-containing coating film therewith, the fluorine-containing silane-based chemically adsorbing substance can be chemically bonded to the surface at high density.

In the method of producing an anti-contaminant coating film according to the invention, by baking, which is to be performed at the last stage of the production, the undercoat layer is solidified and strongly bonded to the substrate. The baking is performed in an inert gas atmosphere to prevent the fluorine-containing coating film from being oxidized and thereby degraded. As a result, an anti-contaminant coating film uniformly and strongly bonded and fixed to the substrate can be formed, and moreover, desired surface modification effects, such as the anti-contaminant property or the like, are maintained for a long time.

The anti-contaminant coating film according to the invention can be suitably used for an anti-contaminant glass for automobiles, which requires good weather resistance and abrasion resistance. Specifically, an anti-contaminant coating film produced according to a method of the present invention exhibits excellent weather resistance and abrasion resistance, and therefore, by employing the coating film for windshields, rear windows, or the like, it is made possible to produce a windshield or rear window capable of maintaining a clean glass surface for a long time. In addition, the anti-contaminant coating film is strongly bonded with the glass surface, and therefore, even if hydrophilic wipers for wiping the surface of the windshield or rear window are provided and the anti-contaminant film is wiped therewith, the anti-contaminant film does not separate from the glass surface and shows excellent abrasion resistance. Furthermore, since the anti-contaminant film exhibits excellent weather resistance, it is possible to provide an automobile having a windshield and a rear window that exhibit excellent anti-contaminant performance for a long time.

Now, the present invention is further detailed below based on the examples thereof. It is to be construed that the following examples are illustrative only and the invention is not limited thereto.

### EXAMPLE 1

### Formation of silica-based coating film - I

Octachlorodisiloxane (Cl(SiCl₂O)₂SiCl₃), serving as a chlorosiloxane compound, was mixed and dissolved in dimethyl silicone (a non-aqueous organic solvent), serving as a first organic solvent, under a dry atmosphere of 15% relative humidity to prepare a 0.5M/l solution for forming a silica-based coating film. The preparation was performed under an atmosphere of such low humidity, because the solution for forming a silica-based coating film becomes cloudy and deteriorates when the relative humidity of the atmosphere exceeds about 35%.

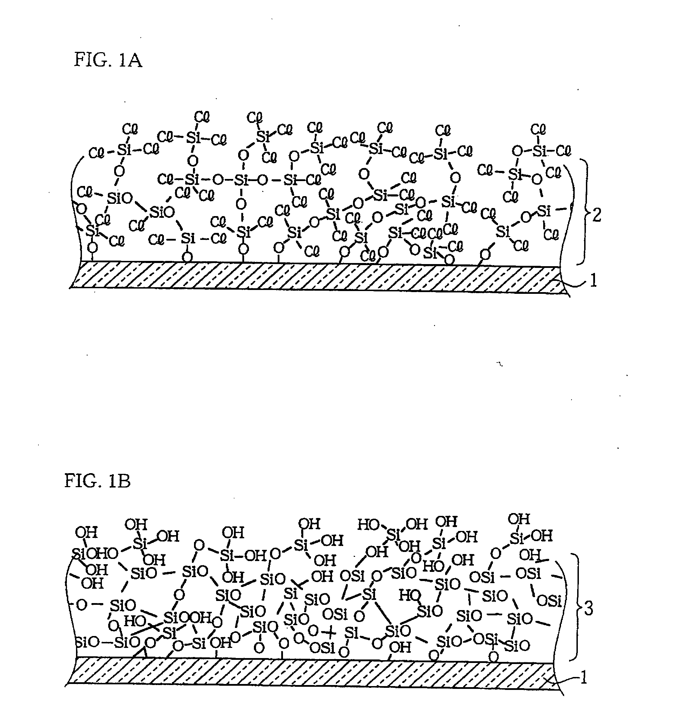

Then, a glass substrate 1 with a hydrophilic surface was furnished and degreased by washing. The solution for forming a silica-based coating film was applied to the surface of the glass substrate 1 in a dry atmosphere as the one described above, and the organic solvent contained in the solution for forming a silica-based coating film was evaporated. Thus, the hydroxyl groups on the surface of the glass substrate 1 and water adsorbed to the glass substrate 1 underwent a dehydrochlorination reaction with the chlorosilyl groups in the octachlorodisiloxane, and a chlorosiloxane oligomer coating film 2 was formed (see Fig. 1A). It should be noted that hardly any of the octachlorodisiloxane was evaporated together with the organic solvent, because octachlorodisiloxane is a compound with a large molecular weight.

Subsequently, when the glass substrate 1 was placed into an atmosphere containing water, also the remaining chlorosilyl groups almost instantly underwent a dehydrochlorination reaction, thus forming a polysiloxane coating film 3 having a large water content and including many hydroxyl groups (see Fig. 1B). Furthermore, excessive adsorbing water (adsorbing water) was removed in a 15 min. low temperature heat treatment at 150°C, thus forming a silica-based coating film having numerous hydroxyl groups on its surface. The film thickness of the silica-based coating film was about 50 nm.

Analyzing the chemical structure of the resulting silica based coating film, it was found that the structure included numerous hydroxyl groups and included structural repeat units of the following structural formula (4), wherein n is an integer^{:}

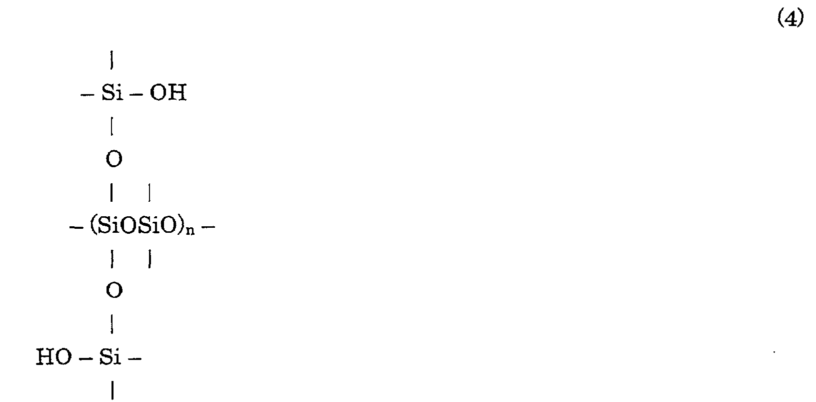

### Formation of fluorine-containing coating film - I

A fluoroalkyl chlorosilane compound (CF₃(CF₂)₇(CH₂)₂SiCl₃), serving as a fluorocarbon-containing chlorosilane compound, was mixed and dissolved in a perfluorocarbon solvent (a non-aqueous organic solvent; trade name: FC-40 by Sumitomo 3M, Ltd.), serving as a second organic solvent, under a dry atmosphere of 5% relative humidity to prepare a 0.1M/l solution for forming a fluorine-containing coating film.

Then, in a dry atmosphere as the one described above, the solution for forming a fluorine-containing coating film was applied to the glass substrate 1 provided with the first layer of silica-based coating film in the previous step. Thus, the chlorosilyl groups of the fluoroalkyl chlorosilane compounds underwent a dehydrochlorination reaction with the numerous hydroxyl groups present at the surface of the silica-based coating film, forming covalent bonds with the surface of the substrate through the siloxane bonds. Moreover, after the fluorine-based solvent (FC-40) in the coating was evaporated (which can be achieved at a temperature in the range of 80 to 150°C), a coating film made of a fluoroalkyl chlorosilane compound was formed.

Subsequently, when the glass substrate 1 was placed into an atmosphere containing water, also the remaining chlorosilyl groups in the coating film reacted with the water, thus producing a fluorine-containing coating film 5. The film thickness of this fluorine-containing coating film 5 was several nanometers.

Analyzing the chemical structure of the resulting fluorine-containing coating film 5 confirmed that the fluorine-containing coating film included the structural repeat units of the following structural formula (5), wherein n is an integer:

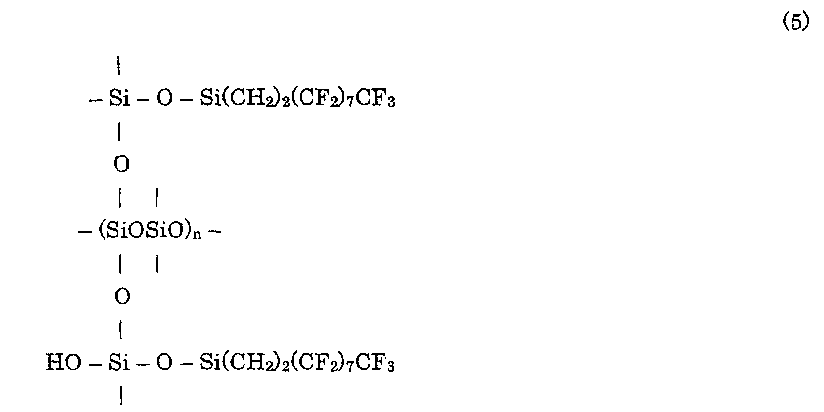

### Baking of double layer coating film - I

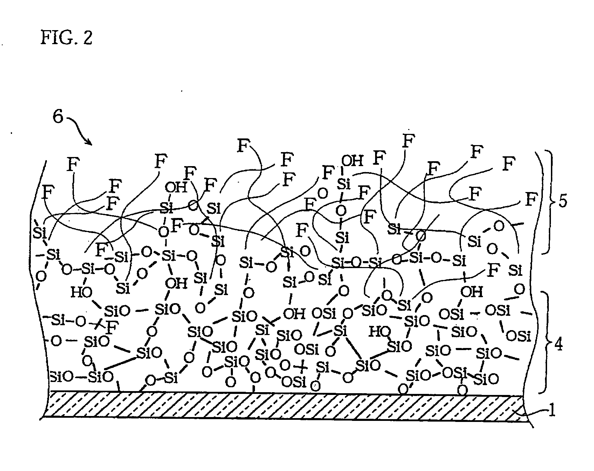

Then, the glass substrate 1 coated with the double layer made of the silica-based coating film and the fluorine-containing coating film 5 was baked in a nitrogen gas atmosphere, so that the silica-based coating film and the fluorine-containing coating film 5 were dehydrated and calcined. Thus, an anti-contaminant glass provided with a highly weather-resistant and durable anti-contaminant coating film 6 on a glass substrate 1 was produced (see Fig. 2). As the OH groups in the silica-based coating film were dehydrated in a condensation polymerization, the silica-based coating film 4 took on a crosslinked structure. The baking was performed at a baking temperature of 400°C for 30 min.

### Performance test

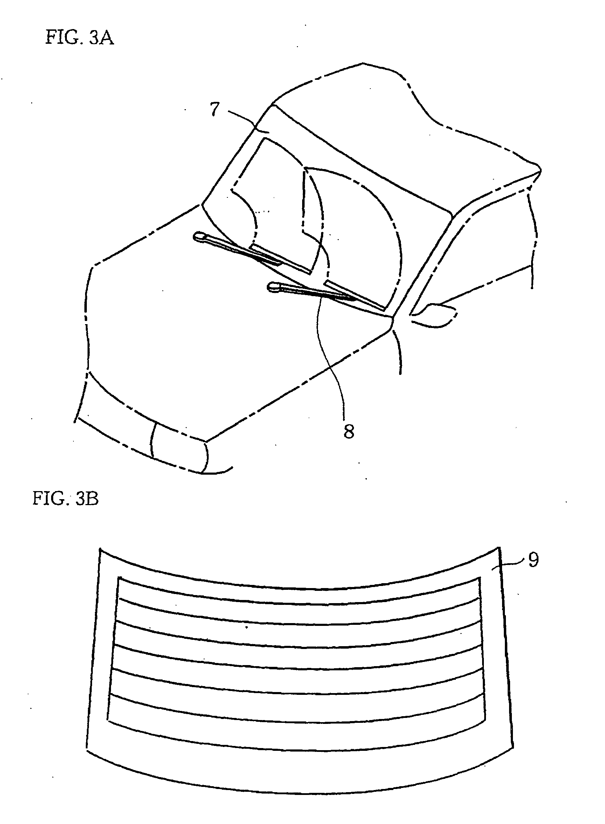

Using, instead of the glass substrate 1, a glass sheet of predetermined-shape for use as a windshield in an automobile, an anti-contaminant coating film was formed with the steps described above. Then, this glass sheet was laminated on another glass sheet with a polyvinyl butyral resin, thus producing an anti-contaminant glass for an automobile windshield (referred to simply as "anti-contaminant windshield" in the following) 7 as shown in Fig. 3A. When laminating the glass sheets, the surface with the anti-contaminant coating film was arranged as an outside surface.

Subsequently, the anti-contaminant windshield glass 7 was subjected to a wiper test with a wiper 8, and its weatherability was examined. As a result, it was determined that the initial water-repellency angle before the wiper test was 115°, and after wiping 20,000 times with the wiper 8, the water-repellency angle was 93°. This confirmed that the durability of the anti-contaminant coating film formed on the anti-contaminant glass 7 is excellent. Then, a weather resistance test was performed with a Super UV Tester available from Iwasaki Electric Co. Ltd. For this, UV light was irradiated for 3000 hours on the anti-contaminant windshield glass 7 for accelerated weathering. After the irradiation, a water-repellency angle of 103° was measured. This confirmed that the anti-contaminant coating film also has excellent weather resistance.

Furthermore, using, instead of the glass substrate 1, an air-tempered glass with a window defogger shaped as a rear window glass for use in an automobile, an anti-contaminant coating film was formed with the steps described above, thus producing an anti-contaminant glass for an automobile rear window glass (referred to simply as "anti-contaminant rear window glass" in the following) 9 as shown in Fig. 3B. Then, the anti-contaminant rear window glass 9 was subjected to a wiper test, and its weather resistance was examined. As a result, it was determined that the initial water-repellency angle before the wiper test was 115°, and after wiping 20,000 times, the water-repellency angle was 95°. This confirmed that the durability of the anti-contaminant coating film formed on the anti-contaminant rear window glass is excellent. Then, a weather resistance test was performed as above with the Super UV Tester, and UV light was irradiated for 3000 hours on the anti-contaminant rear window glass. After the irradiation, a water-repellency angle of 100° was measured. This confirmed that the anti-contaminant coating film also has excellent weather resistance.

### EXAMPLE 2

### Formation of silica-based coating film - II

First, hexamethoxydisiloxane (H₃COSi(OCH₃)₂OSi(OCH₃)₃), serving as an alkoxysilane compound, was mixed and dissolved in ethanol, serving as an organic solvent, to prepare a 0.8M/l solution for forming a silica-based coating film.

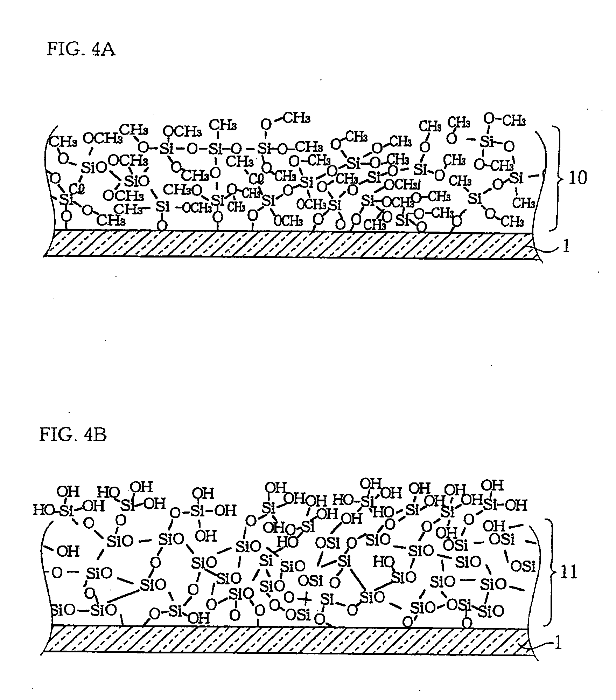

Then, after applying this silica-based coating film to the surface of a glass substrate 1 by the same steps as in Example 1, the ethanol was evaporated (which was achieved at a heating temperature in the range of 80 to 120°C). Thus, the hydroxyl groups on the surface of the substrate and the water adsorbed to the surface of the substrate underwent a partial dealcoholization reaction with the hexamethoxydisiloxane, and a hexamethoxydisiloxane oligomer coating film 10 was formed (see Fig. 4A). It should be noted that hardly any of the hexachlorodisiloxane was evaporated together with the ethanol, because hexachlorodisiloxane is a compound with a large molecular weight.

Moreover, a portion of the methoxy groups in the oligomer coating film remaining on the surface underwent a dealcoholization reaction with the water content of the atmosphere, introducing OH groups, and covalent bonding with the surface of the substrate was achieved by a dehydration reaction between these OH groups and the hydroxyl groups on the surface of the glass substrate.

Subsequently, when the glass substrate 1 was placed into an atmosphere containing water, also the remaining chlorosilyl groups almost instantly underwent a dehydrochlorination reaction, thus forming a polysiloxane coating film 11 having a large water content and including numerous hydroxyl groups (see Fig. 4B). Furthermore, in a 15 minute-low temperature heat treatment at 150°C, a silica-based coating film having numerous hydroxyl groups at its surface was formed. The film thickness of the silica-based coating film was about 40 nm.

Analyzing the chemical structure of the resulting silica-based coating film, it was found that the structure included many hydroxyl groups and included the structural repeat units of the following structural formula (6), wherein n is an integer:

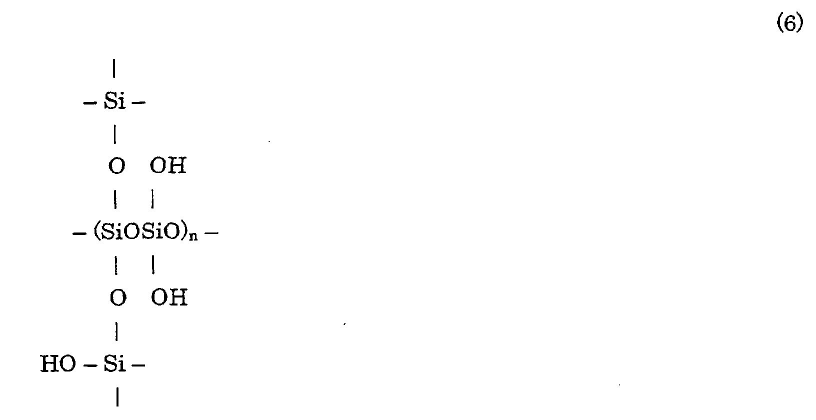

### Formation of fluorine-containing coating film - II

A fluoroalkyl trimethoxy silane compound (CF₃(CF₂)₇(CH₂)₂Si(OCH₃)₃), serving as a fluorocarbon-containing alkoxy silane compound, was mixed and dissolved in methanol, serving as a second organic solvent, under a dry atmosphere of 45% relative humidity with the same step as in Example 1, to prepare a 0.2M/l solution for forming a fluorine-containing coating film.

Then, with the method described above, the solution for forming a fluorine-containing coating film was applied under a dry atmosphere to the glass substrate 1 provided with the first layer of silica-based coating film in the previous step. Thus, the fluoroalkyl trimethoxy silane compound underwent a dealcoholization reaction with the adsorbing water and the OH groups present at the surface of the silica-based coating film, forming covalent bonds through the siloxane bonds. Moreover, after the methanol in the coating was evaporated (which was achieved at a temperature in the range of 120 to 150°C), a coating film made of a fluoroalkyl trimethoxy silane compound was formed.

Subsequently, when the glass substrate 1 was placed into an atmosphere containing water, the remaining alkoxysilyl groups in the coating film too reacted with the water, thus producing a fluorine-containing coating film 13. The film thickness of this fluorine-containing coating film 13 was several nanometers.

Analyzing the chemical structure of the resulting fluorine-containing coating film 13 confirmed that the fluorine-containing coating film included the structural repeat units of the following structural formula (7), wherein n is an integer:

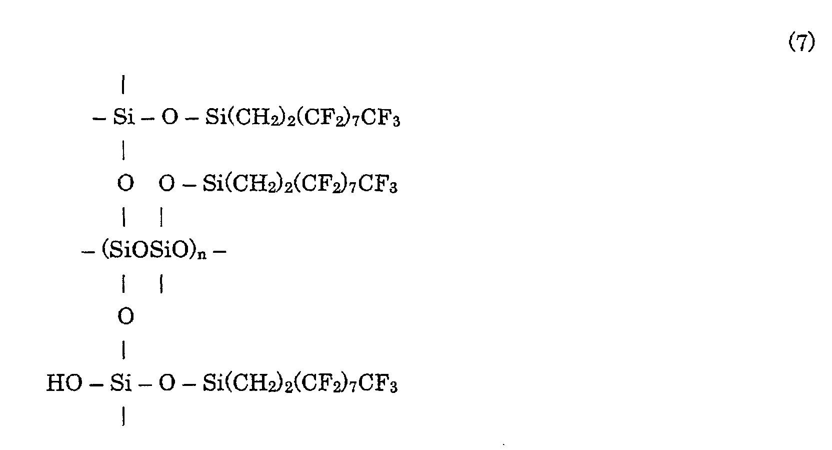

### Baking of double layer coating film - II

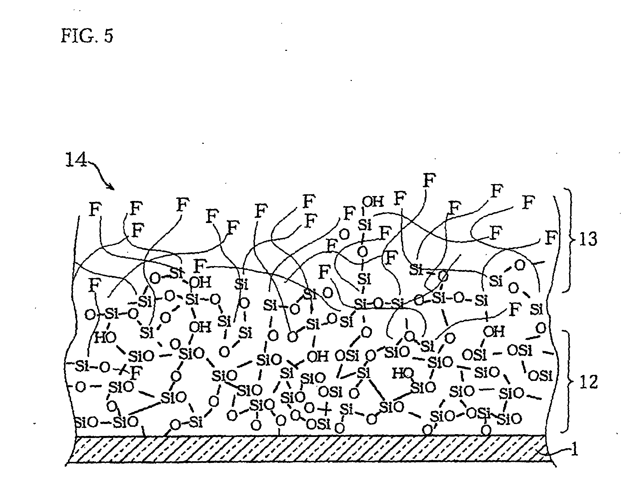

Then, the glass substrate 1 coated with the double layer made of the silica-based coating film and the fluorine-containing coating film 13 was baked and calcined in a nitrogen gas atmosphere, as in Example 1. Thus, an anti-contaminant glass provided with a highly weather-resistant and durable anti-contaminant coating film 14 on a glass substrate 1 was produced (see Fig. 5). As the OH groups in the silica-based coating film were dehydrated in a condensation polymerization, the silica-based coating film 12 took on a crosslinked structure. The baking was performed at a baking temperature of 400°C for 30 minutes.

### Performance test

An anti-contaminant windshield glass for an automobile was prepared by forming an anti-contaminant coating film on a windshield glass for use in an automobile, in the same manner as described above.

Then, this anti-contaminant automobile windshield glass was subjected to a wiper test and a weather resistance test. As a result, it was determined that the initial water-repellency angle before the wiper test was 112°, and after wiping 20,000 times with the wiper, the water-repellency angle was 91°. Moreover, when the material of the wiper was substituted with a hydrophilic nylon resin and another wiper test was performed, the water-repellency angle after the wiper test was 96°. This confirmed that the durability of the anti-contaminant coating film is excellent. Then a weather resistance test was performed with a Super UV Tester available from Iwasaki Electric Co. Ltd., and UV light was irradiated for 3000 hours for accelerated weathering. After the irradiation, a water-repellency angle of 96° was measured. This confirmed that the anti-contaminant coating film also has excellent weather resistance.

Furthermore, using, instead of the glass substrate 1, an air-tempered glass with a window defogger shaped as a rear window glass for use in an automobile as in Example 1, an anti-contaminant coating film was formed with the steps described above, thus producing an anti-contaminant automobile rear window glass. Then, the anti-contaminant rear window glass was subjected to a wiper test with a wiper and a weather resistance test, as in Example 1. As a result, it was determined that the initial water-repellency angle before the wiper test was 113°, and after wiping 20,000 times with the wiper, the water-repellency angle was 91°. This confirmed that the durability of the anti-contaminant coating film is excellent. Then, a weather resistance test was performed with the Super UV Tester, and UV light was irradiated for 3000 hours for accelerated weathering. After the irradiation, a water-repellency angle of 95° was measured. This confirmed that the anti-contaminant coating film also has excellent weather resistance.

It should be noted that although hexamethoxydisiloxane serving as an alkoxysilane compound was used as a raw material for forming the silica-based coating film in this example, it was confirmed that silica-based coating films could also be formed with the same method as in the present example using Si(OC₂H₅)₄, (SiOH(OC₂H₅)₃, or (CH₃O(Si(OCH₃)₂O)₂Si(OCH₃)₅ for example. It is also possible to use commercially available solution for forming silica-based coating film such as the hard coating agents KP-1100A and 1100B (trade names) by Shin-Etsu Chemical Co., Ltd. or Si-80000 (trade name) by Tokyo Ohka Kogyo.

### EXAMPLE 3

Taking an automobile rear window glass as the substrate, a silica-based coating film was formed with the same method as in Example 1, and a fluorine-containing coating film was formed on this silica-based coating film with the same method as in Example 2, thus producing an anti-contaminant glass for an automobile rear window glass provided with an anti-contaminant coating film in accordance with Example 3. Then, this anti-contaminant glass was subjected to a wiper test and a weather resistance test. As a result, it was determined that the initial water-repellency angle (that is, the contact angle between substrate and water) before the wiper test was 110°, and 105° after the wiper test. This confirmed that the durability of the anti-contaminant coating film is excellent. The water-repellency angle after the weather resistance test was 107°. This confirmed that the anti-contaminant coating film also has excellent weather resistance.

When an anti-contaminant glass for an automobile windshield glass was prepared in the same manner and subjected to a wiper test and a weather resistance test, the initial water-repellency angle before the wiper test was 112°, and 106° after the wiper test. This confirmed that the durability of the anti-contaminant coating film is excellent. The water-repellency angle after the weather resistance test was 107°. This confirmed that the anti-contaminant coating film also has excellent weather resistance.

### EXAMPLE 4

Taking an automobile rear window glass as the substrate, a silica-based coating film was formed with the same method as in Example 2, and a fluorine-containing coating film was formed on this silica-based coating film with the same method as in Example 1, thus producing an anti-contaminant coating film in accordance with Example 4. Then, the automobile rear window glass provided with an anti-contaminant coating film of this example was subjected to a wiper test and a weather resistance test as in Examples 1 and 2. As a result, it was determined that the initial water-repellency angle before the wiper test was 111°, and 105° after the wiper test. This confirmed that the durability of the anti-contaminant coating film is excellent. The water-repellency angle after the weather resistance test was 107°, which confirmed that the anti-contaminant coating film also has excellent weather resistance.

When an anti-contaminant glass for an automobile windshield glass was prepared in the same manner and subjected to a wiper test and a weather resistance test, the initial water-repellency angle before the wiper test was 110°, and 105° after the wiper test. This confirmed that the durability of the anti-contaminant coating film is excellent. The water-repellency angle after the weather resistance test was 107°. This confirmed that the anti-contaminant coating film also has excellent weather resistance.

Although the present invention has been fully described by way of examples with reference to the accompanying drawings, it is to be noted that various changes and modification will be apparent to those skilled in the art. Therefore, unless such changes and modifications depart from the scope of the present invention, they should be construed as being included therein.

## Claims

1. A method of producing an anti-contaminant coating film comprising:
contacting a surface of a substrate with a solution for forming a silica-based coating film in a dry atmosphere, the solution comprising a first organic solvent and a silane-based chemically adsorbing substance, and thereafter evaporating the first organic solvent;
forming, on the substrate, a silica-based coating film having hydroxyl groups by contacting the silane-based chemically adsorbing substance on the substrate with water;
forming a fluorine-containing coating film on the silica-based coating film by, without baking the silica-based coating film, contacting the substrate with a solution for forming a fluorine-containing coating film, the solution comprising a fluorine-containing silane-based chemically adsorbing substance and a second organic solvent; and
baking the substrate in an inert gas atmosphere, the substrate having the silica-based coating film and the fluorine-containing coating film formed thereon.

2. A method of producing an anti-contaminant coating film according to claim 1, wherein the baking is performed at a baking temperature higher than a temperature at which hydroxyl groups in the silica-based coating film are dehydrated and solidified.

3. A method of producing an anti-contaminant coating film according to claim 2, wherein the baking is performed at a baking temperature within the range of 300°C to 450°C.

4. A method of producing an anti-contaminant coating film according to claim 3, wherein the baking is performed within a baking time of 10 to 100 minutes.

5. A method of producing an anti-contaminant coating film according to claim 1, further comprising, immediately following the step of forming a silica-based coating film, heat-treating the film at a temperature lower than a temperature at which the silica-based coating film cures.

6. A method of producing an anti-contaminant coating film according to claim 5, wherein the heat-treating is performed at a temperature of 200°C or lower.

7. A method of producing an anti-contaminant coating film according to claim 1, wherein the first organic solvent is a non-aqueous organic solvent, and the silane-based chemically adsorbing substance is a chlorosilane compound or a chlorosiloxane compound.

8. A method of producing an anti-contaminant coating film according to claim 7, wherein the first organic solvent is a hydrocarbon-based solvent, a fluorine-based solvent, or a chlorine-based solvent.

9. A method of producing an anti-contaminant coating film according to claim 1, wherein the first organic solvent is an organic solvent other than a non-aqueous organic solvent and the silane-based chemically adsorbing substance is an alkoxysilane compound.

10. A method of producing an anti-contaminant coating film according to claim 9, wherein the organic solvent other than a non-aqueous solvent is an alcohol-based solvent, an ether-based solvent, or an ester-based solvent.

11. A method of producing an anti-contaminant coating film according to claim 1, wherein the second organic solvent is a non-aqueous organic solvent and the fluorine-containing silane-based chemically adsorbing substance is a fluoroalkylchlorosilane compound.

12. A method of producing an anti-contaminant coating film according to claim 11, wherein the second organic solvent is a hydrocarbon-based solvent, a fluorine-based solvent, or a chlorine-based solvent.

13. A method of producing an anti-contaminant coating film according to claim 1, wherein the second organic solvent is an organic solvent other than a non-aqueous organic solvent and the fluorine-containing silane-based chemically adsorbing substance is a fluoroalkylalkoxysilane compound.

14. A method of producing an anti-contaminant coating film according to claim 13, wherein the organic solvent other than a non-aqueous organic solvent is an alcohol-based solvent, an ether-based solvent, or an ester-based solvent.

15. A method of producing an anti-contaminant glass for an automobile comprising:
contacting a surface of a first substrate formed in a predetermined shape with a solution for forming a silica-based coating film in a dry atmosphere, the solution comprising a first organic solvent and a silane-based chemically adsorbing substance, and thereafter evaporating the first organic solvent;
forming, on the substrate, a silica-based coating film having hydroxyl groups by contacting the silane-based chemically adsorbing substance on the substrate with water;
forming a fluorine-containing coating film on the silica-based coating film by, without baking the silica-based coating film, contacting the substrate with a solution for forming a fluorine-containing coating film, the solution comprising a fluorine-containing silane-based chemically adsorbing substance and a second organic solvent;
baking the substrate in an inert gas atmosphere, the substrate having the silica-based coating film and the fluorine-containing coating film formed thereon; and
attaching the first glass substrate to a second glass substrate, which forms a pair with the first glass substrate, in such a manner that a reverse surface of the first glass substrate is adhered onto the second glass substrate, the reverse surface being opposite from the surface having the silica-based coating film and the fluorine-containing coating film formed thereon.

16. A method of producing an anti-contaminant glass for an automobile according to claim 15, wherein the first glass substrate is an air-tempered glass with a window defogger.

17. A method of producing an anti-contaminant glass for an automobile according to claim 15, wherein wherein the baking is performed at a baking temperature higher than a temperature at which hydroxyl groups in the silica-based coating film are dehydrated and solidified.

18. A method of producing an anti-contaminant glass for an automobile according to claim 17, wherein the baking is performed at a baking temperature within the range of 300°C to 450°C.

19. A method of producing an anti-contaminant glass for an automobile according to claim 18, wherein the baking is performed within a baking time of 10 to 100 minutes.

20. A method of producing an anti-contaminant glass for an automobile according to claim 15, wherein further comprising, immediately following the step of forming a silica-based coating film, heat-treating the film at a temperature lower than a temperature at which the silica-based coating film cures.

21. A method of producing an anti-contaminant glass for an automobile according to claim 20, wherein the heat-treating is performed at a temperature of 200°C or lower.

22. A method of producing an anti-contaminant glass for an automobile according to claim 15, wherein the first organic solvent is a non-aqueous organic solvent, and the silane-based chemically adsorbing substance is a chlorosilane compound or a chlorosiloxane compound.

23. A method of producing an anti-contaminant glass for an automobile according to claim 22, wherein the first organic solvent is a hydrocarbon-based solvent, a fluorine-based solvent, or a chlorine-based solvent.

24. A method of producing an anti-contaminant glass for an automobile according to claim 15, wherein the first organic solvent is an organic solvent other than a non-aqueous organic solvent and the silane-based chemically adsorbing substance is an alkoxysilane compound.

25. A method of producing an anti-contaminant glass for an automobile according to claim 24, wherein the organic solvent other than a non-aqueous solvent is an alcohol-based solvent, an ether-based solvent, or an ester-based solvent.

26. A method of producing an anti-contaminant glass for an automobile according to claim 15, wherein the second organic solvent is a non-aqueous organic solvent and the fluorine-containing silane-based chemically adsorbing substance is a fluoroalkylchlorosilane compound.

27. A method of producing an anti-contaminant glass for an automobile according to claim 26, wherein the non-aqueous organic solvent is a hydrocarbon-based solvent, a fluorine-based solvent, or a chlorine-based solvent.

28. A method of producing an anti-contaminant glass for an automobile according to claim 15, wherein the second organic solvent is an organic solvent other than a non-aqueous organic solvent and the fluorine-containing silane-based chemically adsorbing substance is a fluoroalkylalkoxysilane compound.

29. A method of producing an anti-contaminant glass for an automobile according to claim 28, wherein the organic solvent other than a non-aqueous organic solvent is an alcohol-based solvent, an ether-based solvent, or an ester-based solvent.

30. An anti-contaminant coating film comprising^{:}
a fluorine-containing coating film formed on a surface of a substrate, and a silica-based coating film interposed between the substrate and the fluorine-containing coating film;
the anti-contaminant coating film produced by the process comprising;
contacting the surface of the substrate with a solution for forming a silica-based coating film in a dry atmosphere, the solution comprising a first organic solvent and a silane-based chemically adsorbing substance, thereafter evaporating the first organic solvent, and thereafter, contacting the silane-based chemically adsorbing substance on the substrate with water, whereby the silica-based coating film having hydroxyl groups is formed;
contacting the substrate with a solution for forming a fluorine-containing coating film, the solution comprising a fluorine-containing silane-based chemically adsorbing substance and a second organic solvent, and thereafter evaporating the second organic solvent, whereby the fluorine-containing coating film is formed; and
baking the substrate in an inert gas atmosphere, the substrate having the silica-based coating film and the fluorine-containing coating film formed thereon.

31. An anti-contaminant glass for automobiles, comprising:
an anti-contaminant coating film provided on a glass substrate formed in a predetermined shape, and a silica-based coating film interposed between the substrate and the fluorine-containing coating film;
the anti-contaminant coating film produced by the process comprising;
contacting the surface of the substrate with a solution for forming a silica-based coating film in a dry atmosphere, the solution comprising a first organic solvent and a silane-based chemically adsorbing substance, thereafter evaporating the first organic solvent, and thereafter, contacting the silane-based chemically adsorbing substance on the substrate with water, whereby the silica-based coating film having hydroxyl groups is formed;
contacting the substrate with a solution for forming a fluorine-containing coating film, the solution comprising a fluorine-containing silane-based chemically adsorbing substance and a second organic solvent, and thereafter evaporating the second organic solvent, whereby the fluorine-containing coating film is formed; and
baking the substrate in an inert gas atmosphere, the substrate having the silica-based coating film and the fluorine-containing coating film formed thereon.

32. An anti-contaminant glass for automobiles according to claim 31, wherein the glass substrate is an air-tempered glass with a window defogger.

33. An automobile comprising:
an anti-contaminant glass for automobiles having an anti-contaminant coating film provided on a surface of a glass substrate formed in a predetermined shape;
the anti-contaminant coating film produced by the process comprising;
contacting the surface of the substrate with a solution for forming a silica-based coating film in a dry atmosphere, the solution comprising a first organic solvent and a silane-based chemically adsorbing substance, thereafter evaporating the first organic solvent, and thereafter, contacting the silane-based chemically adsorbing substance on the substrate with water, whereby the silica-based coating film having hydroxyl groups is formed;
contacting the substrate with a solution for forming a fluorine-containing coating film, the solution comprising a fluorine-containing silane-based chemically adsorbing substance and a second organic solvent, and thereafter evaporating the second organic solvent, whereby the fluorine-containing coating film is formed; and
baking the substrate in an inert gas atmosphere, the substrate having the silica-based coating film and the fluorine-containing coating film formed thereon.
